# EUROPÄISCHE PATENTSCHRIFT

(11) **EP 4 097 393 B1**
(45) Veröffentlichungstag und Bekanntmachung des Hinweises auf die Patenterteilung: **24.01.2024**
(21) Anmeldenummer: 21708107.4
(22) Anmeldetag: 27.01.2021
(51) Int. Cl.: F21S 45/30, F21S 43/241, F21S 43/243, F21S 43/249, F21S 43/31, F21S 43/40, F21S 43/50, F21S 43/14, F21S 43/15, B60Q 1/28, B60Q 1/26, B60Q 1/00, B60R 19/52

(54) **LICHTLEITENDER KÜHLERGRILL**
LIGHT-GUIDING RADIATOR GRILL
GRILLE DE RADIATEUR À GUIDAGE DE LUMIÈRE

(30) Priorität: 31.01.2020 CZ 20200049; 26.06.2020 CZ 20200375
(43) Veröffentlichungstag der Anmeldung: 07.12.2022
(73) Patentinhaber: Skoda Auto A.S., 293 01 Mladá Boleslav II (CZ)
(72) Erfinder: KNÉBL, Pavel, 29301 Mladá Boleslav (CZ); KRYST, Zdenek, 29501 Mnichovo Hradiste (CZ); RUZICKA, Zdenek, 29406 Brezno 262 (CZ)
(86) Internationale Anmeldenummer: PCT/CZ2021/000003
(87) Internationale Veröffentlichungsnummer: WO 2021/239166

(56) Entgegenhaltungen:
- EP-A1- 3 190 006
- CN-A- 109 708 074
- DE-A1- 10 228 043
- DE-A1-102018 008 049
- FR-A1- 2 630 077
- JP-A- 2012 113 969
- JP-A- 2013 095 216
- JP-A- 2015 037 034
- US-A1- 2012 113 660

## Beschreibung

### Technisches Gebiet

Die Erfindung betrifft einen Fahrzeugkühlergrill mit Lichtfunktionalität. Dieser lichtleitende Kühlergrill umfasst die Lichtquellen, lichtleitende Elemente, einen Entlüftungsschlauch und ein Entlüftungsteil.

### Bisheriger Stand der Technik

Ein integraler Bestandteil jedes Kraftfahrzeuges ist sein Kühlersystem. Die Hauptkomponente eines solchen Kühlersystems ist der Kühler. Der Kühler ist ein Wärmetauscher, in den die vom Motor produzierte wärmetragende heiße Flüssigkeit eingetrieben wird und diese Wärme mittels der Luft dem Wärmetauscher, also dem Kühler, entnommen wird. In der Regel gelangt die Luft in den Kühlerbereich durch die Maske des Kühlers alias den "Kühlergrill."

Der Kühlergrill wird in der Regel durch vertikale Rippen, horizontale Rippen oder Kombination von beiden gebildet. Zwischen den Rippen strömt die Luft in den Motorraum auf den Kühler ein. Die Luft kann auf den Kühler nur durch die Bewegung des Fahrzeuges und die Trägheit der Luftmoleküle einströmen, oder wird zu diesem Zweck hinter den Kühler auch ein Lüfter angeordnet.

Das Problem bei dem Kühlergrill besteht darin, dass er sich vom Erscheinungsbild her an der wichtigsten Stelle des Fahrzeuges - mitten an der Frontseite befindet. Deshalb waren die Hersteller von Anfang an der wirklichen gewerblichen Fahrzeugfertigung bemüht, die Kühlergrills ästhetisch ansprechend zu gestalten. Eine Herangehensweise um den Kühlergrill ästhetisch aufzubessern war, seine Rippen zu zieren, eventuell seine Form zu ändern. Ebenso kann das Bestreben der Hersteller beobachtet werden, den Kühlergrill möglichst wenig sichtbar zu machen, also das Bestreben diesen optisch weitestgehend mit der Frontpartie des Fahrzeuges zusammenfließen zu lassen. Andere Lösung ist, die Kühlergrillbaugruppe mit Innenbeleuchtung zu gestalten.

Beispielhaft ist das US-amerikanische Patent US9789814 B2, das eine Lösung beschreibt, in der der Kühlergrill umlaufend beleuchtet ist, wodurch ein visueller Effekt erzielt wird. Der Kühlergrill als solcher bleibt konzeptionell identisch. Die Bewahrung des ursprünglichen Kühlergrillkonzeptes gemäß der Beschreibung im genannten Patent schafft nicht viel Raum für weitere Innovationen.

Weiteres Beispiel stellt das chinesische Gebrauchsmuster CN204279309 U dar, das eine Lösung beschreibt, in der in die Spalten des durch horizontale und vertikale Rippen gebildeten Kühlergrill LED-Spotleuchten eingesetzt sind. Durch das Leuchten dieser LED-Leuchten entsteht bestimmter visueller Effekt. Das ursprüngliche Kühlergrillkonzept bleibt jedoch identisch. Die Bewahrung des ursprünglichen Kühlergrillkonzeptes gemäß der Beschreibung im vorgenannten US-amerikanischen Patent sowie in dem behandelten chinesischen Gebrauchsmuster schaffen jedoch nicht viel Raum für weitere Innovationen.

Anderes Beispiel stellt das taiwanische Gebrauchsmuster TWM494725 U dar, das eine Lösung beschreibt, in der der Kühlergrill vertikale Rippen aufweist und an diesen Rippen die Leuchten angeordnet sind. Ebenso wie bei den vorstehenden Lösungen bleibt das Kühlergrillkonzept immer gleich. JP 2015 037034 A offenbart ein lichtleitender Kühlergrill mit einem Lichtleiter.

Es wäre also geeignet eine Lösung vorzubringen, in der der Kühlergrill einen Lichteffekt bieten wird, weiterhin die Luft in den Kühler ansaugen wird und gleichzeitig einen visuellen Eindruck abweichend von allen Lösungen nach dem Stand der Technik gewähren wird. Auch für Fahrzeuge, bei denen der Kühlergrill nicht zur Luftzufuhr zum Kühler dient, entweder, weil das Fahrzeug keinen Kühler aufweist, oder weil die Luft anderweitig zugeführt wird, wäre es geeignet, einen Fahrzeugkühlergrill mit Lichtfunktionalität zu gewähren, der eine ästhetische Funktion und zugleich eine Lichtfunktion erfüllt, also zum Beispiel die Sichtbarkeit des Fahrzeuges erhöht und/oder die Straße vor dem Fahrzeug beleuchtet. Aus Sicht der gewerblichen Anwendbarkeit muss solcher Kühlergrill ferner wenigstens das erfüllen, dass er kompakt, mit der Karosserie kompatibel ist und seine ästhetische und Leuchtfunktion unter höchst unterschiedlichen Bedingungen wie Tag/Nacht, Trockenheit/Nässe, Winter/Sommer erfüllt.

### Darstellung der Erfindung

Die Nachteile der aus dem Stand der Technik bekannten Lösungen werden in gewissem Maße durch den lichtleitenden Kühlergrill beseitigt, der einen Lichtleiter, wenigstens eine Leiterplatte mit einer Menge von Spotlichtquellen, ein Gehäuse, einen Rahmen und eine Außenabdeckung umfasst. Das Gehäuse ist dabei wenigstens an einem Abschnitt seines Umfanges mit der Außenabdeckung verbunden und der Rahmen und Lichtleiter befinden sich zwischen dem Gehäuse und der Außenabdeckung, wobei der Rahmen wenigstens an einem der beiden Teile, dem Gehäuse oder der Außenabdeckung, befestigt ist und wobei der Lichtleiter am Rahmen angebracht ist. Die Außenabdeckung deckt die meiste Fläche der Montageöffnung des Kühlergrills ab und ist für das Licht vom Lichtleiter durchlässig. Der lichtleitende Kühlergrill umfasst ferner einen Entlüftungsschlauch, der wenigstens eine Öffnung für die Luftzufuhr in den Schlauch und wenigstens eine Öffnung für die Luftabfuhr aus dem Schlauch in den lichtleitenden Kühlergrill aufweist und der lichtleitende Kühlergrill ferner wenigstens einen Entlüftungsteil für die Luftabfuhr aus dem Kühlergrill umfasst. Der Entlüftungsschlauch umfasst mehrere zur Außenabdeckung gerichtete Öffnungen für die Luftabfuhr aus dem Schlauch in den lichtleitenden Kühlergrill.

Der beschriebene lichtleitende Kühlergrill mit einem Entlüftungsschlauch und Entlüftungsteil kann einige oder alle oben genannten Bestandteile und Merkmale umfassen, d. h. er kann einen Lichtleiter mit beschriebener horizontalen Platte und einige Paare von ungefähr vertikalen Rippen umfassen, wobei hinter der horizontalen Platte ein Raum für die Lichtquellen geschaffen wird, einen Reflektor, separate Lichtquellen für einzelne Rippen und/oder für die horizontale Platte usw. aufweisen.

Der lichtleitende Kühlergrill umfasst mehrere durchsichtige oder lichtdurchlässige, bzw. lichtleitende Elemente, die vor Verschmutzung geschützt werden sollen. Aus diesem Grund ist es vorteilhaft, den Kühlergrill so abzuschließen, dass zwischen das Gehäuse und die Außenabdeckung spontan keine Luft mit Schmutzpartikeln eindringt, die sich z. B. an der Außenabdeckung oder dem Lichtleiter ablagern und die Leuchtkraft des lichtleitenden Kühlergrills mindern können. Damit der so abgeschlossene lichtleitende Kühlergrill infolge der eindringenden Feuchtigkeit durch das verwendete Material nicht beschlägt wird, ist es geeignet, den Kühlergrill mit Entlüftungsteilen zu versehen, d. h. mit einem Entlüftungsschlauch, der die Luft in den Kühlergrill einführt und mit dieser Luft die einzelnen Bestandteile im Inneren des Kühlergrills abzublasen, sowie mit einem Entlüftungsteil, der die zugeführte Luft zusammen mit dem Wasserdampf nach außen abführt.

Der Entlüftungsschlauch führt vorteilhaft durch das Gehäuse nach außen aus dem Kühlergrill, wo er (mit der Öffnung für die Luftzufuhr in den Schlauch oder mehreren solchen Öffnungen) an geeignete Luftzufuhr angeschlossen ist. Beispielsweise kann die Luft durch das Gitter im Bereich des Kotflügels zugeführt werden, hinter dem die Luftführung zum Kühler ist. Diese Führung kann also zusätzlich auch die Luft in den lichtleitenden Kühlergrill zuführen. Vorteilhaft kann solche Luftzufuhr einen Staubfilter aufweisen, damit in das Innere des Kühlergrills kein Schmutz eingetragen wird. Im Inneren des Kühlgrills weist der Schlauch Öffnungen für die Luftabfuhr aus dem Schlauch in den lichtleitenden Kühlergrill auf, d. h. Öffnungen, durch welche die Luft in den Kühlergrill ausströmt. Die Öffnungen für die Luftabfuhr aus dem Schlauch in den lichtleitenden Kühlergrill können verschiedene Durchmesser und Anordnung in Abhängigkeit von der Größe und Anordnung der sonstigen Bestandteile des lichtleitenden Kühlergrills haben. Als Entlüftungsteil kann dann eine Öffnung mit halbdurchlässiger Membrane sein, welche die Luft mit dem Wasserdampf aus dem Kühlergrill auslässt, jedoch das Eindringen der Luft nach innen des Kühlergrills durch die Entlüftungsteile vermeidet. Bevorzugt stellt das Entlüftungsteil ein Gummi- oder Kunststoffkrümmer (z. B. aus PP-TD40) mit einem Luftfilter dar. Das Luftfilter hat bevorzugt die Form einer Rolle und die Struktur eines feinen Netzgewebes für das Abfangen der Staubpartikel.

Der Entlüftungsschlauch umfasst mehrere zur Außenabdeckung gerichteten Öffnungen für die Luftabfuhr aus dem Schlauch in den lichtleitenden Kühlergrill. Die Bestandteile des Kühlergrills können dann an mehreren Stellen abgeblasen werden, was insbesondere für die Außenabdeckung geeignet ist, die am meisten zum Beschlagen tendiert und zugleich eine relativ große Fläche aufweist. Weitere Öffnungen können dann hin zum Lichtleiter gerichtet sein. Der lichtleitende Kühlergrill kann auch größere Anzahl von Entlüftungsschläuche umfassen.

Bevorzugt umfasst der Entlüftungsschlauch zwei Grundteile - einen Innenschlauch und einen Außenschlauch. Der Innenschlauch befindet sich innerhalb des Kühlergrills, er umfasst Öffnungen für die Luftabfuhr aus dem Schlauch in den lichtleitenden Kühlergrill und ist in der Nähe des Gehäuses an den Außenschlauch angeschlossen. Der Außenschlauch dient dann zur Luftführung vom Lufteinlass (d. h. er umfasst eine Öffnung für die Luftzufuhr in den Schlauch) in den Innenschlauch. Der Innen- und Außenschlauch sind miteinander auf geeignete Weise verbunden, z. B. ist zwischen ihnen ein Kunststoffdorn mit einer Öffnung entlang der gesamten Länge oder ein kürzerer Kunststoffschlauch, auf den von einem Ende der Innenschlauch und vom anderen Ende der Außenschlauch fest aufgesetzt sind. Der Innen- und Außenschlauch können miteinander auch verklebt oder durch die Konstruktion des Gehäuses direkt verbunden werden, beispielsweise kann die Rückwand des Gehäuses eine durchgehende Öffnung aufweisen, deren Ränder nach hinten sowie nach vorne hinausragen und auf diese hinausragenden Abschnitte von hinten (von außen des Kühlergrills) der Außenschlauch und von vorne (von innen des Kühlergrills) der Innenschlauch aufgesetzt werden.

Der erfindungsgemäße lichtleitende Kühlergrill umfasst bevorzugt mehrere Entlüftungsteile für die Sicherstellung einer ausreichenden Durchflussmenge an Luft durch den Kühlergrill.

Der Rahmen umfasst vorteilhaft einen oberen Rahmenteil und einen unteren Rahmenteil, wobei der Lichtleiter mit seiner oberen Hälfte am oberen Rahmenteil und mit seiner unteren Hälfte am unteren Rahmenteil angebracht ist. Während der Montage des lichtleitenden Kühlergrills werden der obere und untere Rahmenteil vorteilhaft fest verbunden, bevorzugt verschraubt. Die Aufteilung des Rahmens in zwei Teile erleichtert die Montage des lichtleitenden Kühlergrills, bzw. ihren Zusammenbau sowie die Herstellung einzelner Bauteile. Angesichts dessen, dass der Lichtleiter relativ komplizierte Form aufweist und im Rahmen verlässlich und genau befestigt werden soll, muss auch der Rahmen relativ komplizierte Form aufweisen, die einfacher herstellbar ist, wenn der Rahmen aus mehreren Bauteilen gebildet wird. Zwischen dem oberen und unteren Rahmenteil kann dann im Rahmen eine Spalte entstehen, durch welche die horizontale Lichtleiterplatte oder das Licht für die horizontale Lichtleiterplatte hindurchgeht. Der obere Rahmenteil kann teilweise die oberen Rippen und der untere Rahmenteil die unteren Rippen umschließen, d. h. der Rahmen kann Öffnungen aufweisen, deren Größe und Anordnung der Größe und Anordnung der Rippen entspricht.

Als Lichtquellen werden vorteilhaft die LED-Lichtquellen verwendet und die Menge der Spotlichtquellen befindet sich bevorzugt hinter dem Rahmen (bzw. hinter dem oberen und unteren Rahmenteil), der undurchsichtig ist, und der Lichtleiter geht durch die Öffnungen im Rahmen (bzw. durch die Spalte zwischen dem oberen und unteren Rahmenteil) aus dem Raum zwischen dem Rahmen und dem Gehäuse in den Raum zwischen dem Rahmen und der Außenabdeckung hindurch. Dank des undurchsichtigen Rahmens sind die funktionellen Kühlergrillteile wie Leiterplatten und Reflektoren von außen nicht sichtbar, sodass das Erscheinungsbild des Kühlergrills verbessert wird.

Die Außenabdeckung und der Lichtleiter können aus dem synthetischen Polycarbonat oder Polymethylmethacrylat hergestellt werden.

Bevorzugt sind die Außenabdeckung und der Lichtleiter in beide Richtungen lichtdurchlässig. Dank dessen dringt das auf den lichtleitenden Kühlergrill einfallende Tageslicht wenigstens teilweise nach innen durch, sodass es den Lichtleiter beleuchtet und die Form des Lichtleiters somit auch ohne das Einschalten der Lichtquellen gut sichtbar ist. Das Tageslicht kann im Inneren des Kühlergrills z. B. vom undurchsichtigen Rahmen (Rahmenteilen) reflektiert werden.

Der erfindungsgemäße lichtleitende Kühlergrill kann weiter einen dünnen Lichtleiter aufweisen, der im Bereich zwischen dem Lichtleiter und der Lichtquelle an dem Lichtleiter befestigt ist. Dies kann die absorbierte Lichtmenge im Inneren des Kühlergrills reduzieren und so die Leuchtstärke erhöhen. Ebenso kann die Verwendung des dünnen Lichtleiters eine gleichmäßige Beleuchtung des Lichtleiters durch geringere Anzahl von Lichtquellen ermöglichen, d. h. mit geringerem Energieverbrauch und/oder geringerer Anzahl der gebrauchten Lichtquellen.

Der lichtleitende Kühlergrill kann wenigstens einen Durchgang für die Luftführung hin zum Kühler aufweisen. Solcher Durchgang kann eine Öffnung in der Außenabdeckung umfassen, auf welche die Wände des Durchgangs anknüpfen, die z. B. durch ein nach vorne in Kontakt mit der Außenabdeckung durchgezogenes Teil des Gehäuses gebildet werden. Von der Rückseite ist dann der Durchgang offen und auf ihn ist die weitere außerhalb des Kühlergrills angeordnete Luftführung angeschlossen, durch welche die Luft zum Kühler geleitet wird. Der Durchgang für die Luftführung hin zum Kühler ist also vorteilhaft vom Inneren des Kühlergrills getrennt, sodass es zu keinem spontanen Durchgang der (unfiltrierten) Luft mit Schmutzpartikeln in den Kühlergrill kommt. Der Entlüftungsschlauch kann dann an diesen Luftdurchgang angeschlossen werden.

Der lichtleitende Kühlergrill nach vorliegender Erfindung kann ferner eine Radarabdeckung umfassen, wobei das Gehäuse an seiner Rückseite eine durchgehende Öffnung aufweist und die Radarblende in der Öffnung im Gehäuse befestigt ist und von der Rückseite des Gehäuses durch den größten Teil der Stärke des lichtleitenden Kühlergrills in Richtung zur Außenabdeckung hindurchführt, wobei die Radarblende von hinten den offenen Raum für das Radar begrenzt. Die Stärke des Kühlergrills ist also die von hinten nach vorne gemessene Abmessung. Die Radarblende umfasst also den Vorderteil und die Wände und ist zum Gehäuse befestigt. Bevorzugt ist zwischen der Radarblende und dem Gehäuse eine Dichtung, die das Durchdringen der Luft von innen der Radarblende nach innen des Kühlergrills vermeidet.

An der Radarblende (in dem Raum im Inneren der Blende, d. h. im Raum, der sich im Wesentlichen im Inneren des lichtleitenden Kühlergrills befindet, jedoch von hinten offen und von dem Raum im Inneren des Kühlergrills getrennt ist, in dem sich weitere Bestandteile des lichtleitenden Kühlergrills, wie der Lichtleiter, befinden) kann ein Radarhalter befestigt werden, der anschließend das Radar tragen kann. Der lichtleitende Kühlergrill mit der Radarblende bilden dann zusammen mit dem Radarhalter und dem Radar die Baugruppe des lichtleitenden Kühlergrills mit Radar.

Wie aus dem Funktionsprinzip des Radars bekannt ist, strahlt das Radar eine elektromagnetische Welle ab, die frequenzmoduliert wird, wobei das Modulationssignal die Form einer steilen Kante (Sägezahn- oder Dreieckverlauf) hat. Die abgestrahlte Welle wird vom Objekt vor dem Radar reflektiert und an die Antennen im Radar zurückgeworfen (neben der Reflexion wird diese Welle zusätzlich durch Dopplereffekt verzerrt). Das Radar hinter den Antennen überlagert das abgestrahlte und empfangene Signal und das Differenzspektrum der Signale (für jede Sägezahnform separat) wird digital verarbeitet. Das Frequenzmaximum des Spektrums entspricht der Entfernung des Objektes und aus der Phasenverschiebung des Spektrums zwischen empfangenen Signalen wird die Richtung des Objektes bestimmt. Sollte es zu unerwünschten Reflexionen an der Radarblende oder Außenabdeckung kommen, wäre das Empfangssignal durch diese Reflexionen verzerrt und die Genauigkeit des Radars gemindert (d. h. ein Objekt vor dem Fahrzeug würde beispielsweise an anderer Position verortet, als es sich tatsächlich befindet, was offensichtlich eine unerwünschte und gefährliche Situation darstellt).

Die Radarstrahlung geht also durch die Radarblende (ihre Vorderwand) und durch die Außenabdeckung des lichtleitenden Kühlergrills hindurch. Damit der Durchgang der Strahlung durch die Radarblende, die Außenabdeckung und die Luftspalte dazwischen die Strahlung nicht markant beeinflusst und somit die Radardaten nicht verzerrt und seine Reichweite nicht mindert usw., ist es vorteilhaft, die Stärke der Radarblende sowie der Außenabdeckung und deren Abstand genau einzurichten, wenigstens im Bereich des Strahlungskegels des Radars. Die Stärke beider Bauteile ist deshalb im Bereich des Strahlungskegels bevorzugt konstant.

Der Lichtleiter weist bevorzugt an der den Lichtquellen zugewandten Seite eine Optik zur Homogenisierung des Lichtes jeder Lichtquelle und an der gegenüberliegenden, zur Außenabdeckung gerichteten Seite eine Optik zur Homogenisierung des aus dem Lichtleiter austretenden Lichtes auf. Diese Optik für die Lichthomogenisierung kann die Gestalt von Polstern (d. h. Im Grunde gerundeter Vorsprünge und/oder Ausnehmungen), Mikrooptik oder geformten Optikflächen aufweisen, oder es kann eine Optik in Gestalt von Kristallen sein. Beliebige für die Lichthomogenisierung geeignete optische Elemente, die für Fachkundige bekannt sind, können mit der vorliegenden Erfindung genutzt werden. Dank der Nutzung der Optik für die Lichthomogenisierung ist der Lichtleiter gleichmäßiger beleuchtet, sodass die Bildung von Störbildern an der Fahrbahn vor dem Fahrzeug oder von Störbildern, welche die entgegenfahrenden Fahrer stören könnten, reduziert wird.

Der lichtleitende Kühlergrill kann weiter vorteilhaft wenigstens einen Reflektor für die Lichtquellen umfassen. Der Lichtleiter umfasst dabei eine horizontale Platte und einige Paare von ungefähr vertikalen Rippen, die mit der horizontalen Platte fest verbunden sind. Jede Rippe weist einen hinteren Abschnitt, der die horizontale Platte in Richtung zum Gehäuse hin überragt, wobei zwischen den hinteren Abschnitten der Rippen jedes Paares ein Raum für die Lichtquellen begrenzt ist. Die Leiterplatten mit Lichtquellen und Reflektoren befinden sich in diesem Raum für die Lichtquellen, wobei wenigstens eine Lichtquelle einer der Rippen zugewandt ist und wenigstens eine weitere Lichtquelle dem Reflektor zugewandt ist. Der Reflektor ist für die Reflexion von Licht aus der jeweiligen Lichtquelle in Richtung zum Lichtleiter hin ausgestaltet, bevorzugt in Richtung zur horizontalen Platte. Das von der jeweiligen Spotlichtquelle abgestrahlte Licht wird also hin zum Reflektor abgestrahlt und zum Lichtleiter reflektiert.

Das Gehäuse und die Außenabdeckung bilden also die Außenränder des lichtleitenden Kühlergrills, zwischen denen das Innere des Kühlergrills begrenzt ist, d. h. ein Raum, in dem die weiteren genannten Bauteile angeordnet sind. Die Außenabdeckung deckt mehr als die Hälfte der Fläche der Montageöffnung für den Kühlergrill ab, damit seine Fläche ausreichend groß ist und der lichtleitende Kühlergrill somit über eine ausreichende Leuchtkraft verfügt (kleinere Fläche der Außenabdeckung könnte verursachen, dass die Leuchtkraft des Kühlergrills unzureichend wird, sodass der lichtleitende Kühlergrill neben den eingeschalteten Scheinwerfern untergeht). Der Rahmen, der auch aus mehreren getrennten Bauteilen gebildet werden kann, dient dann zur Befestigung weiterer Bauteile, insbesondere der Leiterplatten und des Lichtleiters, zum Gehäuse und/oder der Außenabdeckung. Bei der Herstellung werden dann gewöhnlich zuerst der Rahmen (beziehungsweise einzelne Rahmenteile) mit den Leiterplatten, Reflektoren und dem Lichtleiter korrekt ausgerichtet und miteinander verbunden. Zur Verbindung werden vorteilhaft die Schraubverbindungen verwendet. Diese verbundenen Bauteile werden anschließend zum Gehäuse befestigt, in das Gehäuse werden die jeweiligen Kabelstränge und eventuelle Entlüftungselemente zugeführt und anschließend wird das Gehäuse mit seinem Rand mit dem Rand der Außenabdeckung verbunden. Bevorzugt sind das Gehäuse und die Außenabdeckung umlaufend miteinander verklebt, sodass zwischen diese spontan keine Luft und Schmutzpartikeln eindringen.

Der beschriebene lichtleitende Kühlergrill stellt im Grunde einen Scheinwerfer dar, sodass neben dem wesentlich aufgebesserten Design des Fahrzeug-Frontends, wo bei der Einschaltung der Lichtquellen der ausstrahlende Lichtleiter über die durchsichtige Außenabdeckung sichtbar ist, kann der lichtleitende Kühlergrill auch zur Beleuchtung der Fahrbahn vor dem Fahrzeug und zur besseren Sichtbarkeit des Fahrzeuges beitragen. Dank der beschriebenen Form des Lichtleiters, wo hinter der horizontalen Platte zwischen der oberen und unteren Rippenreihe ein Raum für die Anordnung der Leiterplatten mit Lichtquellen und der Reflektoren begrenzt ist, sodass die Montage erleichtert wird und das Licht effizient an den Lichtleiter übertragen wird. Die Leiterplatte ist dann partiell von vorne, von oben sowie von unten mit Lichtleiter umschlossen, sodass die nach unten und nach oben in einzelne Rippen und/oder nach vorne in die horizontale Lichtleiterplatte gerichteten Lichtquellen an einer Leiterplatte angeordnet werden können. Dadurch, dass zwischen den hinteren Enden der oberen und unteren Rippen sich der beschriebene Raum befindet, d. h. dadurch, dass die horizontale Platte nicht bis zum hinteren Ende des Lichtleiters führt, ist es zusätzlich möglich, die hinteren Enden der Rippen mit Rahmen zu umschließen, bzw. diese in den Rahmen einzusetzen, sodass die Position des Lichtleiters gegenüber dem Rahmen genau vorgegeben ist und die Montage erleichtert wird, insbesondere dann die Zentrierung der Lichtquellen und Reflektoren gegenüber dem Lichtleiter.

Die Begriffe "vordere" und "hintere", bzw. nach vorne und nach hinten, beziehen sich hier auf die relative Position oder Ausrichtung der für den in Fahrzeug einzubauenden Kühlergrill gedachten Bauteile, sodass der Vorderteil dem Raum vor dem Fahrzeug näherliegt als der Hinterteil, die Richtung nach vorne vor das Fahrzeug hinführt, d. h. entspricht der üblichen Fahrtrichtung, und die Richtung nach hinten hinter das Fahrzeug, bzw. in Richtung zum Fahrgastraum hinführt.

Vorteilhaft führt eine der Rippen aus jedem Paar der ungefähr vertikalen Rippen unter einem Winkel von 50° bis 120° oberhalb der horizontalen Platte und die zweite Rippe aus jedem Paar unter dem Winkel von 50° bis 120° unterhalb der horizontalen Platte. Solche Gestalt des Lichtleiters kann als Fischskelettform bezeichnet werden. So ein Lichtleiter ist ästhetisch hochwertiger, d. h. ansprechender, die Form des Lichtleiters ähnelt einem bekannten gewöhnlichen Kühlergrill und es droht nicht, dass die Rippen mit der horizontalen Platte verschwimmen.

Jedes Paar der ungefähr vertikalen Rippen kann eine längere Rippe und eine kürzere Rippe umfassen. Als kürzere Rippe kann die nach oben gerichtete Rippe, als längere Rippe dann die nach unten gerichtete Rippe sein.

Die Rippen können alle einen gleichen Winkel mit der horizontalen Platte einschließen oder die Winkel für die einzelnen Rippen können unterschiedlich sein. Vorteilhaft ist der Lichtleiter symmetrisch zur Vertikalachse. Die Winkel zwischen einzelnen Rippen und der horizontalen Platte können sich z. B. in Richtung zur Mitte des Lichtleiters dem rechten Winkel nähern, während in der Richtung zu beiden Seitenrändern des Lichtleiters diese Winkel zu- oder abnehmen können. Die Rippen in jedem Paar können, jedoch müssen nicht gegeneinander parallel sein. Sie können aus der horizontalen Platte an gleicher Stelle oder an unterschiedlichen Stellen abzweigen. Die Abstände zwischen den Rippen können konstant sein.

Bevorzugt wird genutzt, dass jede Rippe aus jedem Paar der ungefähr vertikalen Rippen wenigstens eine selbständige Lichtquelle aufweist, die das Licht in diese Rippe abstrahlt. In der Nähe jeder Rippe ist also ein zu dieser Rippe gerichteter Lichtleiter angeordnet. Dadurch sind die einzelnen Rippen gut sichtbar. Darüber hinaus können die einzelnen Lichtquellen auch individuell angesteuert werden, sodass das Erscheinungsbild des eingeschalteten lichtleitenden Kühlergrills anwenderspezifisch angepasst werden kann. Die Lichtquellen sind in solchem Fall mit einer Steuereinheit verbunden, die für diese individuelle Ansteuerung, d. h. insbesondere das Ein- und Ausschalten, eventuell auch die Änderung der Leuchtkraft, ausgestaltet ist. Diese Steuereinheit kann die Lichtquellen auch automatisch ansteuern, z. B. entsprechend der automatischen adaptiven Scheinwerfereinstellung gemäß der Fahrtsituation (z. B. unterschiedliches Leuchten in und außerhalb der Stadt u. ä.).

Bevorzugt umfasst der lichtleitende Kühlergrill mehrere Lichtquellen für die Beleuchtung der horizontalen Lichtleiterplatte. Beispielsweise können diese Lichtquellen auf die Reflektoren leuchten, die das Licht an die Rückseite der horizontalen Platte reflektieren, durch die das Licht in den Lichtleiter eintritt.

Die horizontale Lichtleiterplatte kann eben sein, mit zunehmender Stärke in der Richtung nach hinten. Ähnlich kann auch die Stärke jeder Rippe in der Richtung nach hinten zunehmen.

### Erläuterung der Zeichnungen

Die Darstellung der Erfindung wird weiter anhand von Ausführungsbeispielen erläutert, die unter Nutzung der beigefügten Zeichnungen beschrieben sind, wobei zeigen die
- Fig. 1: die Außenabdeckung des erfindungsgemäßen lichtleitenden Kühlergrills.

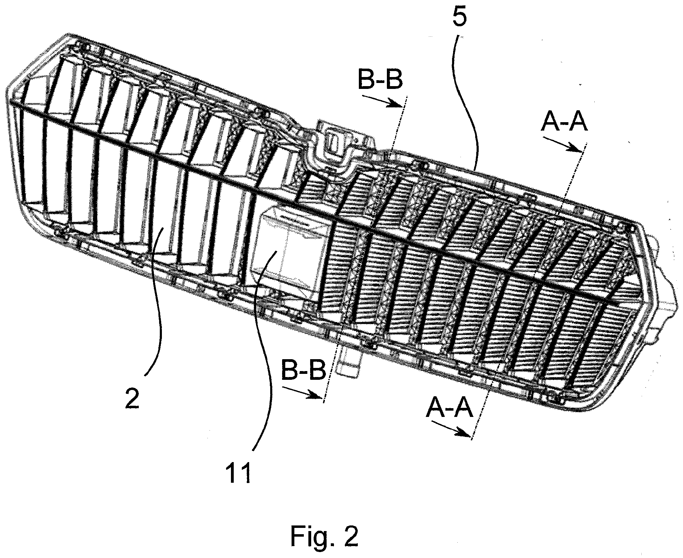

- Fig. 2: den lichtleitenden Kühlergrill ohne die Außenabdeckung in einer Frontansicht, wo die Gestalt des Lichtleiters in Form einer Platte mit vertikalen Rippen sichtbar ist.
- Fig. 3: eine prinzipielle Schnittdarstellung entlang der durch den lichtleitenden Kühlergrill über eine der vertikalen Rippen geführten Schnittlinie A-A nach Fig. 2.
- Fig. 4: eine Detailansicht des Raumes hinter der horizontalen Lichtleiterplatte, in dem die Leiterplatte mit Lichtquellen und Reflektoren befestigt ist.
- Fig. 5: eine prinzipielle Schnittdarstellung entlang der durch den lichtleitenden Kühlergrill zwischen den vertikalen Rippen geführten Schnittlinie B-B nach Fig. 2.
- Fig. 6: den oberen Teil des lichtleitenden Kühlergrills in einer prinzipiellen Schnittdarstellung entlang der durch die mittlere vertikale Rippe geführten Schnittlinie nach Fig. 2.
- Fig. 7: eine schematische Darstellung der Frontansicht des Lichtleiters nach Fig. 2.
- Fig. 8: eine alternative Ausführung der Außenabdeckung des lichtleitenden Kühlergrills, wobei diese Außenabdeckung eine Öffnung für die Luftführung zum Kühler aufweist.
- Fig. 9: eine Schnittdarstellung gemäß der durch die Mitte des Kühlergrills mit dem Radarhalter und dem an der Radarblende angebrachten Radar geführten vertikalen Linie.
- Fig. 10: ein Teil der Schnittdarstellung des lichtleitenden Kühlergrills entlang der durch die Radarblende, den Radarhalter und dem Radar geführten horizontalen Schnittlinie nach Fig. 9.

### Ausführungsbeispiele der Erfindung

Im Folgenden wird die Erfindung anhand der in den Figuren dargestellten Ausführungsbeispiele erläutert. Die Hauptbestandteile des lichtleitenden Kühlergrills bilden die Außenabdeckung 1, der Lichtleiter 2, der obere Rahmenteil 3, der untere Rahmenteil 4, die Reflektoren 8, das Gehäuse 5, die Leiterplatten 10 mit LED-Lichtquellen 6 und der Entlüftungsschlauch 9 mit Öffnungen.

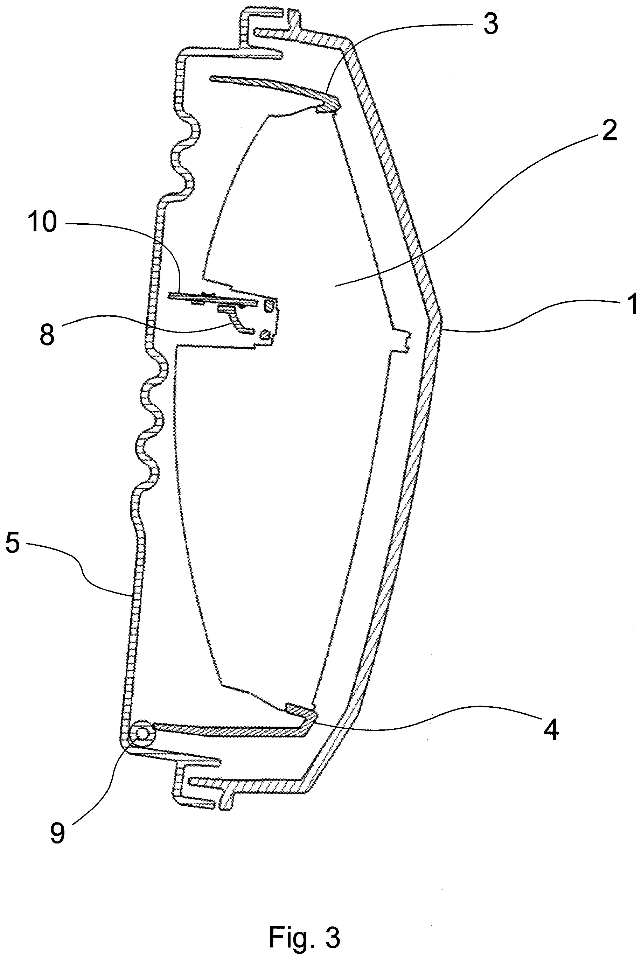

Wie in der Fig. 3 dargestellt, wird die Außenform des lichtleitenden Kühlergrills in dieser Ausführung durch die Außenabdeckung 1, die den vorderen Teil der Kühlergrilloberfläche bildet, und dem Gehäuse 5, das den hinteren Teil der Außenoberfläche des Kühlergrills bildet, bestimmt. (Die Begriffe "vordere" und "hintere" sind hier gedacht in Bezug zu dem im Fahrzeug eingebauten Kühlergrill, d. h. der vordere Teil des Kühlergrills ist näher zum Raum vor dem Fahrzeug, der hintere Teil des Kühlergrills ist näher dem Motor u. ä.). Das Innere des Kühlergrills ist dann der Raum begrenzt durch das Gehäuse 5 und die Außenabdeckung 1, die miteinander umlaufend mittels der formschlüssig geformten Ränder verbunden sind, die miteinander verklebt sind.

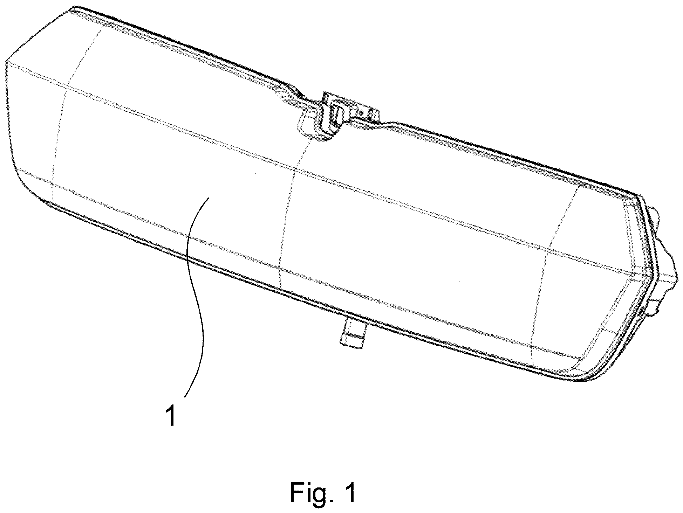

Die Außenabdeckung 1 kann aus Polycarbonat (PC) oder Polymethylmethacrylat (PMMA) hergestellt werden. Die Herstellung kann durch das Fräsen, Gießen, Pressen, Spritzgießen oder durch eine Kombination dieser Verfahren erfolgen. Die Außenabdeckung 1 ist ein kompaktes, unteilbares Teil und wird in die geeignete Gestalt für den Einsatz im konkreten Fahrzeug geformt. In der ersten vorteilhaften Ausführung ist diese durch teilweise gebrochenen Flächen geformt, die an die gebrochenen Flächen der Karosserie anknüpfen. Sämtliche gebrochene Flächen sind integrale Bestandteile der Außenabdeckung 1 und entstehen durch ihre Formung bei der Herstellung. Die Außenabdeckung 1 ist so konstruiert, dass sie ein Lichtanteil in beide Richtungen durchlässt - in Richtung vom lichtleitenden Kühlergrill nach außen sowie nach innen. Die Darstellung der Außenabdeckung 1 in einer Frontansicht zeigt die Fig. 1.

Die Luft wird in dieser Ausführung zum Kühler durch die Gitter im Bereich des Kotflügels zugeführt, d. h. die Luftzufuhr zum Kühler besorgt nicht der lichtleitende Kühlergrill.

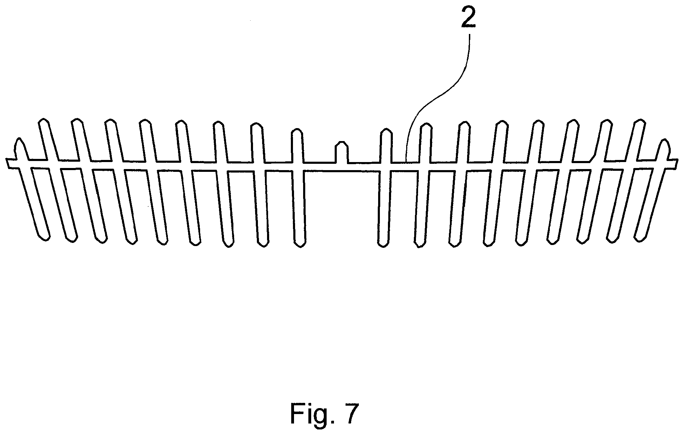

Der Lichtleiter 2, s. Fig. 7, hat die Gestalt einer horizontalen Platte mit vertikalen Rippen und wird bevorzugt aus einem synthetischen Polycarbonat (PC) oder Polymethylmethacrylat (PMMA) durch Fräsen, Gießen, Pressen, Spritzgießen oder in Kombination dieser Herstellprozesse hergestellt. Die Außenabdeckung 2 ist ein kompaktes, unteilbares Teil und wird in die geeignete Gestalt für den Einsatz im konkreten Fahrzeug geformt.

In der dargestellten Ausführung umfasst der Lichtleiter 2 achtzehn Rippenpaare, wo jedes Paar eine aus der horizontalen Platte des Lichtleiters 2 ausgehende obere und untere Rippe umfasst. Wie in Fig. 7 erkennbar ist, schließen die Rippen aus diesen Paaren mit der Fläche der horizontalen Platte einen Winkel von ungefähr 90° bis 110° ein (bzw. 70°-90°, in Abhängigkeit davon, an welcher Rippenseite der Winkel gemessen wird). In der Mitte des Kühlergrills ist eine weitere obere Rippe. Im Bereich unter dieser mittleren Rippe ist in dem Kühlergrill ein Raum ausgebildet, der für die Anordnung des Radars 13 und als Durchgang für die elektromagnetischen Impulse aus dem hinter dem Kühlergrill angeordneten Radar 13 oder als Durchgang für die Luft zum Kühler dienen kann.

Alternativ kann die Anzahl der Rippen beliebig sein, eventuell müssen die oberen und unteren Rippen nicht aus gleicher Stelle an der horizontalen Platte, sie können unter anderem Winkel u. ä. ausgehen. Ebenso kann bei einzelnen Rippen deren Länge, Stärke u. ä. unterschiedlich sein. Bei einer Seitenansicht können die Rippen beispielsweise eine Rechteck-, Trapez- oder Dreieckform haben. In einer anderen alternativen Ausführung kann in der Mitte des Lichtleiters 2 auch eine mittlere Rippe sein und der Durchgang für die Luft oder die Impulse aus dem Radar 13 wo auch immer ausgebildet werden, sei es anderswo im Kühlergrill oder außerhalb diesen, oder solche Durchgänge müssen auf dem jeweiligen Fahrzeug gar nicht ausgebildet werden.

Die Form des Rippenpaars in einer Seitenansicht ist in Fig. 3 erkennbar. Beide Rippen überragen die horizontale Platte in der Richtung nach hinten, sodass zwischen deren hinteren Hälften ein Raum ausgebildet ist, durch den die Leiterplatten 10, Reflektoren 8 und/oder oberer und unterer Rahmenteil 3, 4 durchgehen, die einige Bestandteile des Kühlergrills tragen und diese zum Gehäuse 5 und/oder der Außenabdeckung 1 befestigen, wie weiter ausführlich beschrieben wird.

Die Stärke der horizontalen Platte des Lichtleiters 2 nimmt in der dargestellten Ausführung in der Richtung nach hinten zu, analog kann die Stärke der Rippen zunehmen. In der Frontansicht (s. Fig. 7) erscheint die horizontale Platte als eine Gerade (bzw. als schmaler Rechteck) und die einzelnen Schnitte als Punkte an dieser Gerade. Von diesem Punkt erstrecken sich unter dem Winkel von 50° bis 120° aufwärts eine die kürzere (obere) Rippe darstellende Gerade und unter gleichem Winkel abwärts eine die längere (untere) Rippe darstellende Gerade. Die Längen der einzelnen Rippen und die Relationen deren Längen, ebenso wie die Anzahl der Rippen können unterschiedlich sein.

In einer alternativen Ausführung kann die horizontale Platte des Lichtleiters 2 durchbogen sein, sodass diese z. B. in der Richtung zur Mitte des Kühlergrills aufsteigt und in der Richtung zur Seiten absteigt oder umgekehrt. Die Stärke der horizontalen Platte kann alternativ konstant sein oder sie kann in Richtung nach hinten abnehmen.

Das Gehäuse 5 ist bevorzugt aus einem Gemisch des Polycarbonats mit Acryl-Butadien-Styrol-Kautschuk oder aus einem talkum- bzw. glasfasergefüllten Polypropylen mit Massenanteil zwischen 20-40 Prozent oder aus einem glasfasergefüllten Polybutylenterephthalat hergestellt. Die Herstellung erfolgt durch das Spritzgießen. Das Gehäuse 5 hat teilweise eine flache und teilweise eine geformte Rückwand. Die konkrete Form der Rückwand des Gehäuses u5 hängt u. a. von den umliegenden Einbauteilen des jeweiligen Fahrzeuges (die Form der Montageöffnung für den Kühlergrill, Art der Luftführung zum Kühler, konkrete Ausführung der Befestigung des Kühlergrills in der Montageöffnung usw.), von der geforderten Steifigkeit, von der konkreten Befestigung der Bauteile des durchleuchteten Kühlergrills zum Gehäuse 5 usw. ab. Ebenso umfasst es eine Stelle für eine permanente umlaufende Verbindung mit der Außenabdeckung 1 über den gesamten Umfang.

Das Gehäuse 5 umfasst eine Akkommodationsvorrichtung für den plattenförmigen Lichtleiter 2, in die dieser Lichtleiter 2 eingeführt ist (direkt und/oder mittels des oberen und unteren Rahmenteils 3, 4). An der Rückseite des plattenförmigen Lichtleiters 2 innerhalb der Akkommodationsvorrichtung ist auch eine LED-Lichtquelle 6 oder ein dünner Lichtleiter mit LED-Lichtquellen 6 an einem oder beiden seinen Enden angeordnet. Alle solchen LED-Lichtquellen 6 sind an vier Leiterplatten 10 angeordnet, die mittels eines Kabelstrangs mit einem Stecker am Ende eingespeist werden, der aus dem lichtleitenden Kühlergrill über die im Gehäuse 5 ausgebildeten Durchlaufhülse hinausgeführt ist.

An der Rückwand des Gehäuses 5 befindet sich mindestens ein Entlüftungsteil, in bevorzugter Ausführung sind dort drei oder vier Entlüftungsteile angeordnet. Das Entlüftungsteil wird gebildet durch einen geformten Gummikrümmer mit Innenstegen und einem Staubfilter, der zwei Grundfunktionen hat. Die erste Funktion besteht in der Vermeidung des Eindringens von Staub und Schmutzpartikeln in den lichtleitenden Kühlergrill und die zweite Funktion besteht in der Trocknung des Innenraumes des lichtleitenden Kühlergrills, bzw. in der Ableitung des Wasserdampfes aus dem lichtleichtenden Kühlergrill nach außen. Der Grund für die Anordnung der Entlüftungsteile in den abgeschlossenen lichtleitenden Kühlergrill liegt darin, dass die Körper einzelner Bauteile des lichtleitenden Kühlergrills in vorteilhaften Ausführungen aus Polycarbonat und Polymethylmethacrylat hergestellt sind, was polare Polymere sind und deshalb auch die Feuchtigkeit aufnehmen und durch diese Aufnahme der Feuchtigkeit in den lichtleitenden Kühlergrill sehr geringe Wassermenge gelangen kann. Durch die Additiven in diesen Polymeren und deren Oberflächenbehandlung kann die Aufnahme der Feuchtigkeit und somit auch der Wassereintritt in den lichtleitenden Kühlergrill deutlich reduziert werden, jedoch dieses Phänomen kann nie vollständig eliminiert werden, deshalb muss der Wasseraustritt aus dem lichtleitenden Kühlergrill nach außen hin sichergestellt werden.

Das Gehäuse 5 ist mit einer permanenten untrennbaren Verbindung (Klebstoff) mit der Außenabdeckung 1 verbunden. Im Falle der Verwendung des lichtleitenden Kühlergrills in einem Elektroauto oder wenn die Luftzufuhr zum Kühler außerhalb des Kühlergrills geführt wird, muss der Kühlergrill keine Öffnungen für die Luftführung zum Kühler enthalten. Die Außenabdeckung 1 ist für das Licht in beiden Richtungen - einwärts zum sowie auswärts vom lichtleitenden Kühlergrill durchlässig.

Zwischen dem Gehäuse 5 und der Außenabdeckung 1 befinden sich ein oberer Rahmenteil 3 und ein unterer Rahmenteil 4, die undurchsichtig sind. Der obere und untere Rahmenteil 3 haben sowohl die Funktion der Verankerung des Lichtleiters 2, wie auch eine ästhetische Funktion, da sie aufgrund ihrer Undurchsichtigkeit den Lichtdurchgang in den Bereich hinter ihnen verhindern, also in Bereich, wo sich Kabelstränge und weitere für die Funktion des Kühlergrills notwendige Elemente befinden und die keinen ästhetischen Wert haben. Beide Rahmenteile trennen also physisch sowie optisch die ästhetischen Bestandteile des lichtleitenden Kühlergrills von den funktionalen Bestandteilen ohne ästhetischer Funktion ab.

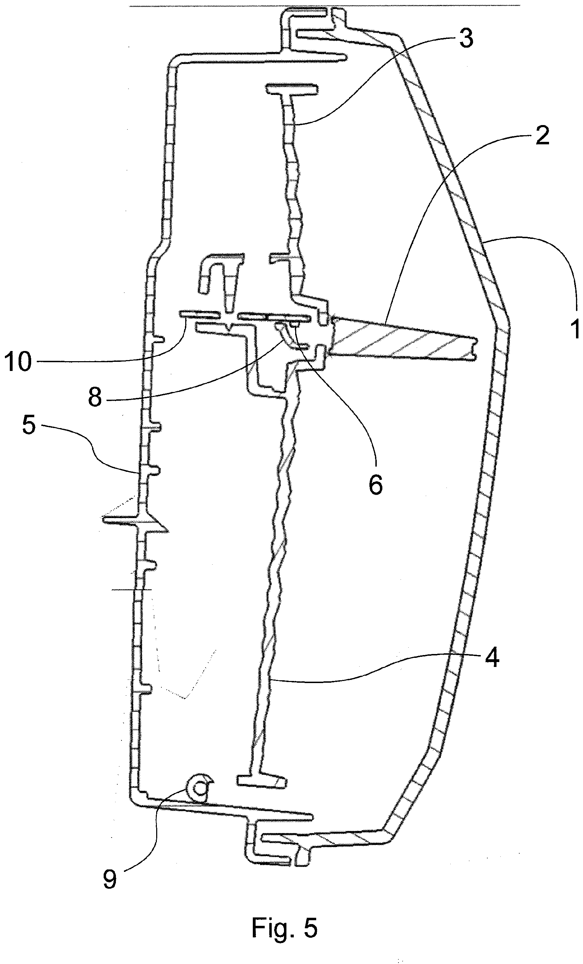

Wie aus den Schnittdarstellungen in Fig. 3 und 5 zu entnehmen ist, ist der Lichtleiter 2 oben und unten zum oberen Rahmenteil 3, bzw. unteren Rahmenteil 4 befestigt, und diese Rahmenteile gehen durch die Räume zwischen den Rippen in den Raum hinter der horizontalen Platte des Lichtleiters 2 durch, wo die Leiterplatten 10 mit den Lichtquellen 6 und Reflektoren 8 an diese angebracht sind. In dieser Ausführung sind die Leiterplatten 10 zusammen mit den Reflektoren 8 mit einer Schraube zum oberen Rahmenteil 3 befestigt.

Die Zahl der LED-Spotlichtquellen 6 ist wählbar und kann sich aus der Form des Lichtleiters 2, seiner Größe, der Leuchtkraft einzelner LED, den Anforderungen auf Leuchtkraft des gesamten lichtleitenden Kühlergrills usw. ergeben. Die LED-Lichtquellen 6 sind in dem hinteren Bereich des Lichtleiters 2 so angeordnet, dass das von ihnen abgestrahlte Licht in Richtung zum vorderen Bereich des Lichtleiters 2 und anschließend auswärts vom lichtleitenden Kühlergrill leuchtet. In einer alternativen Ausführung kann statt der Menge von LED-Leuchten ein dünner Lichtleiter mit LED-Lichtquellen 6 an einem oder an beiden seiner Enden verwendet werden. In solcher Ausführung ist der dünne Lichtleiter an der Rückseite des Lichtleiters 2 befestigt. In beiden vorteilhaften Ausführungen sind alle LED-Lichtquellen 6 an der Leiterplatte 10 angeordnet und mit dem Lichtleiter 2 im Kontakt. Das Licht der LED-Lichtquellen 6 wird von dem lichtleitenden Kühlergrill nach außen so geleitet, dass es über die Schnittstelle LED - Lichtleiter 2 nach außen vom Lichtleiter 2 hin zur Außenabdeckung 1 und danach über die Außenabdeckung 1 auswärts vom lichtleitenden Kühlergrill hindurchgeht.

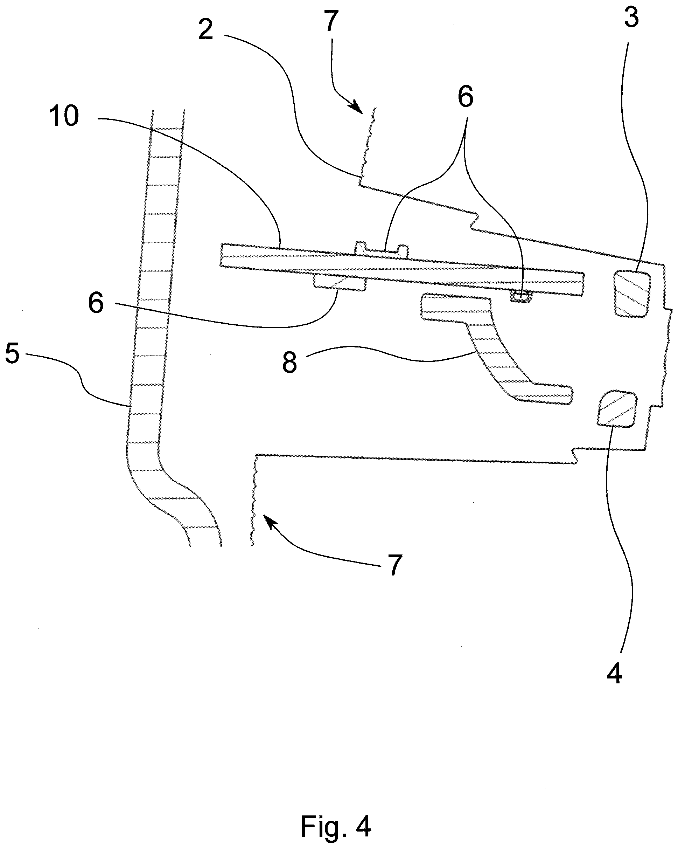

Wie im Detail in Fig. 4 dargestellt, ist in der angezeigten Ausführung des lichtleitenden Kühlergrills an den Leiterplatten 10 für jede Rippe eine Lichtquelle u6 angeordnet, d. h. eine oben und eine unten, und ferner ist an diesen eine Menge von den Reflektoren 8 zugewandten Lichtquellen 6 angeordnet, wobei der Reflektor 8 das Licht zur horizontalen Lichtleiterplatte 2 hin reflektiert. Die Lichtquellen 6 für die oberen Rippen, unteren Rippen und die horizontale Platte können gleich sein oder, wie in der dargestellten Ausführung, sich voneinander unterscheiden. Insbesondere können sich diese Lichtquellen 6 in der Leuchtkraft und Form des abgestrahlten Lichtkegels unterscheiden.

Der Lichtleiter 2 weist an der den LED-Lichtquellen 6 zugewandten Seite (an der Rückseite) eine Optik 7 für die Lichthomogenisierung auf, die zur Homogenisierung des in den Lichtleiter 2 eintretenden Lichtes dienen, und an der Vorderseite weist er eine Optik 7 für die Lichthomogenisierung auf, die zur Homogenisierung des aus dem Lichtleiter 2 austretenden Lichtes dient. Diese Optik 7 für die Lichthomogenisierung kann die Form von Polstern, Mikrooptik, geformter Optikflächen oder einer Optik in Gestalt von Kristallen aufweisen. In der dargestellten Ausführung handelt sich um eine Reihe von horizontalen Ausschnitten, bzw. Ausnehmungen an den jeweiligen Flächen des Lichtleiters 2. Die Art der Optik 7 für die Lichthomogenisierung kann am Ein- sowie Ausgang des Lichtleiters 2 gleich oder unterschiedlich sein.

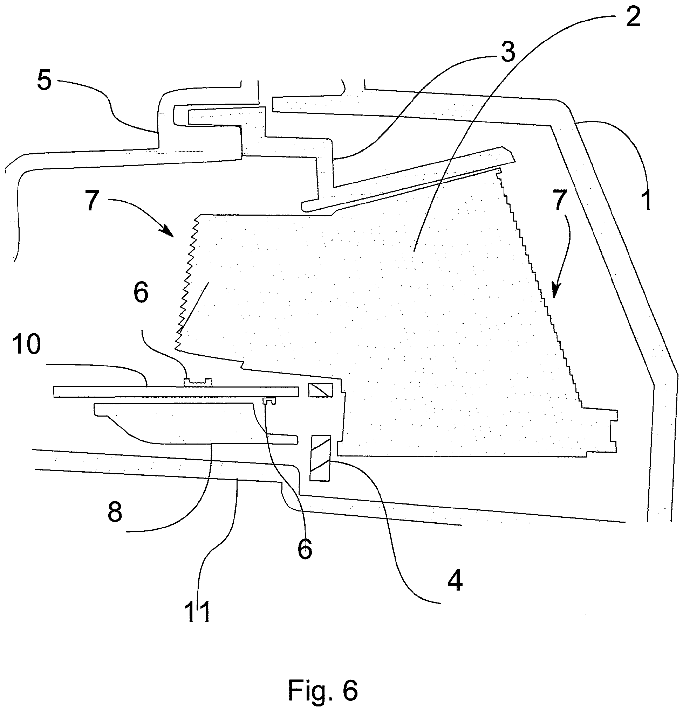

Der obere Rahmenteil 3 und untere Rahmenteil 4 sind bevorzugt aus dem synthetischen Polycarbonat (PC) oder Polymethylmethacrylat (PMMA) hergestellt. Deren Herstellung erfolgt durch das Spritzgießen. Die Rahmenteile 3 und 4 sind nicht als ebene Fläche ausgestaltet. Deren Formung ist wahlfrei und hängt von den Anforderungen auf das Endprodukt ab. Ein Teil der Fläche der Rahmenteile 3 und 4 wird durch eine 3D-Struktur von gebrochenen Flächen oder aus Mengen von 3D-Flächen und ein Teil deren Fläche durch ebene Fläche entsprechend den Anforderungen auf das finale Erscheinungsbild gebildet. Im oberen und unteren Rahmenteil 3, 4 befinden sich Öffnungen, durch die der Lichtleiter 2, bzw. die Rippen des Lichtleiters 2 hindurchgehen. Die Form dieser Öffnungen hängt von der konkreten Ausführung des Lichtleiters 2 ab. Beide Rahmenteile 3, 4 weisen an der Rückseite die Haltestücke auf, in welche die Leiterplatten 10 und Reflektoren 8 (s. Fig. 5) befestigt sind, und an dem oberen, bzw. unteren Ende weisen sie Haltestücke für die Verankerung am Gehäuse 5 (s. Fig. 6) auf. Der obere und untere Rahmenteil 3, 4 können wenigstens teilweise metallisiert sein, damit sie das einfallende Licht nicht absorbieren (sei es Tageslicht oder das Licht vom Lichtleiter 2 oder der Lichtquellen 6), und damit also die Leuchtkraft, bzw. Leuchteffizienz des lichtleitenden Kühlergrills erhöht wird.

Vorteilhaft ist die Form (und die Genauigkeit der Formherstellung) des oberen und unteren Rahmenteils 3, 4 so, dass durch die Befestigung der Leiterplatten 10, Reflektoren 8 und des Lichtleiters 2 an den Rahmenteilen diese Bauteile ausreichend genau ausgerichtet und zentriert werden (d. h. beispielsweise, dass das auf den Reflektor 8 einfallende Licht genau in die horizontale Platte des Lichtleiters 2 reflektiert wird).

In der Schnittdarstellung in Fig. 6 ist die Befestigung des oberen Rahmenteils 3 zum Gehäuse 5 und die Öffnung in diesem Rahmenteil erkennbar, die durch den hinteren Teil der mittleren Rippe des Lichtleiters 2 hindurchgeht. Zwischen dem oberen und unteren Rahmenteil 3, 4 ist eine Spalte, durch die das Licht vom Reflektor 8 zur horizontalen Platte des Lichtleiters 2 hindurchgeht. Unter der mittleren Rippe grenzt der lichtleitende Kühlergrill einen Raum ab, durch den die Radarblende 11 durchgehen kann, die den Raum für Radar 13 begrenzt. Von der Vorderseite ist dieser Raum durch die Vorderwand der Radarblende 11 abgeschlossen, noch weiter vorne mit der Außenabdeckung 1 verdeckt. Die Vorderwand der Radarblende 11 und die Außenabdeckung an der Stelle vor der Radarblende 11 haben eine konstante Stärke, die vom verwendeten Material abhängt. Durch geeignete Wahl dieser Stärken und eventuell der Abstände beider Bauteile wird ermöglicht, dass die Radarwellen aus dem Raum auswärts durch die Radarblende 11 vor den Kühlergrill und zurück durchgehen, ohne dass sie wesentlich verzerrt werden.

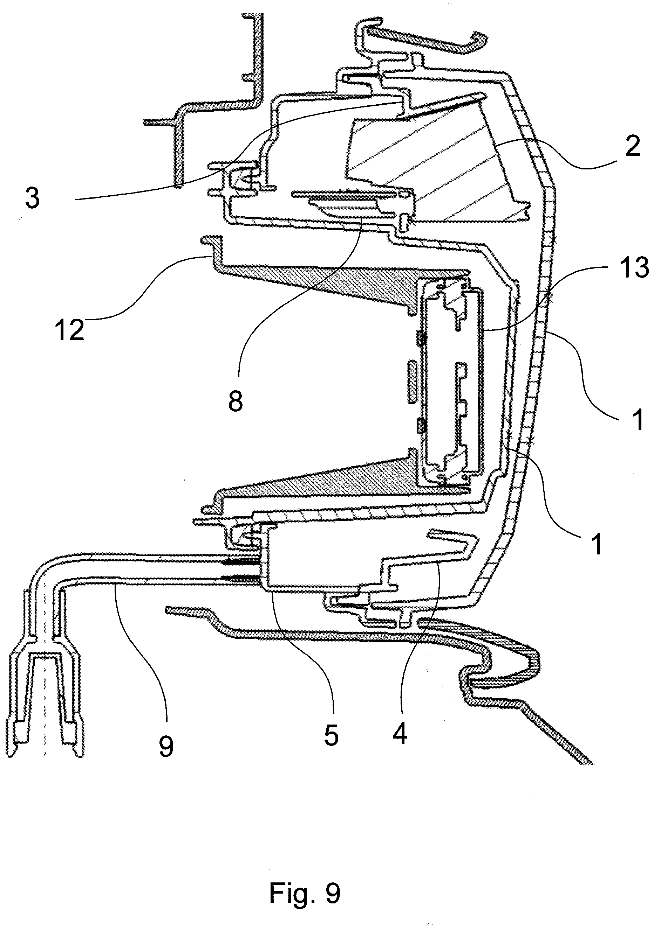

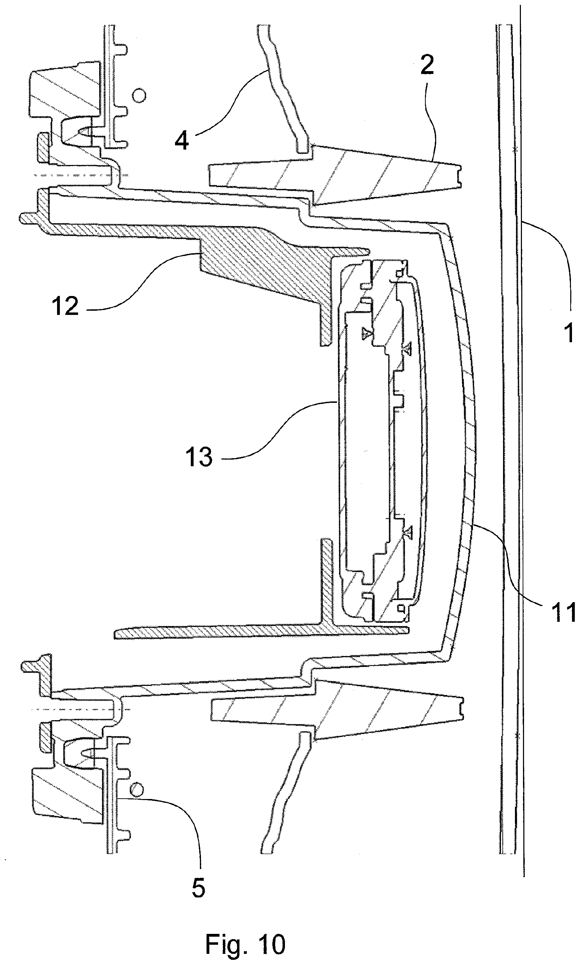

Beispielsweise für die Radarblende 11 und die Außenabdeckung 1 aus Polycarbonat und für einen gewöhnlichen Radar 13, der ein elektromagnetisches Feld im Frequenzband von 76-77 GHz abstrahlt, ist es vorteilhaft, eine Stärke der Radarblende 11 (wenigstens an deren Vorderwand) im Bereich von 2,25 mm bis 2,45 mm und die Stärke der Außenabdeckung 1 (wenigstens an dem die Radarblende 11 verdeckenden Abschnitt) im Bereich von 3,4 mm bis 3,6 mm zu wählen. Diese beiden Bauteile sind gegeneinander zugeneigt, was zur Minderung der Signalverzerrung führt. Die angeführten Werte der Stärken wurden experimentell und/oder durch Computersimulation für jeweiliges Material so festgelegt, damit das Signals des Radars 13 nicht verzerrt wird, der an einem Radarhalter 12 an der Radarblende 11 angeordnet werden kann, wie in Fig. 9 und 10 dargestellt ist. Für die Erhaltung des Erscheinungsbildes können dadurch zwischen dem Radar 13 und dem Raum vor dem Fahrzeug zwei durch eine Luftspalte getrennte Materialschichten sein und nicht nur eine oder keine Materialschicht, wie es bei den gewöhnlichen Kühlergrillen der Fall ist. Der Radar 13 ist somit nicht sichtbar und in der Außenabdeckung 1 muss wegen diesen keine Öffnung für den Durchgang des Strahlungskegels ausgebildet werden.

Infolge der genannten Abmessungen reflektieren diese Bauteile die Wellen nicht mehr als -15 dB und bewirken keine bidirektionale Signalabschwächung größer als 3 dB. Die Erfüllung dieser Werte bedeutet dabei, dass das Signal vom Radar 13 nicht unpassend verzerrt wird (weder in der Amplitude, noch in der Phase), sodass diese Bauteile das Verhalten des Radars 13, bzw. die Qualität der vom Radar 13 gelieferten Daten nicht verschlechtern. Die beschriebene Anordnung des Radars 13 an der Radarblende 11 des erfindungsgemäßen lichtleitenden Kühlergrills beeinflusst zugleich unwesentlich das Erscheinungsbild des Kühlergrills sowie seine Leuchtkraft.

Der Reflektor 8 ist bevorzugt aus dem synthetischen Polycarbonat (PC) durch das Fräsen, Gießen, Pressen, Spritzgießen oder durch eine Kombination dieser Herstellverfahren hergestellt. Der Reflektor 8 ist komplett oder partiell metallisiert, wobei die Metallisierung durch eine Reihe von Verfahren erzielt werden kann, wie zum Beispiel durch die Vakuumbedampfung oder stromloses Metallisieren. Die Metallisierung wird mindestens an der dem Lichtleiter 2 zugewandten Seite appliziert. Der Reflektor 8, bzw. seine Funktionsfläche, die das Licht zum Lichtleiter 2 reflektiert, kann eine beliebige, vorteilhaft abgerundete Form aufweisen. Die konkrete Ausformung ist frei wählbar und hängt zum Beispiel von den Anforderungen an die resultierende Leuchtkraft des gesamten Kühlergrills, von der verwendeten Lichtquelle 6, von der Form des Lichtleiters 2 (insbesondere seiner horizontalen Platte), von der Spaltgröße zwischen dem oberen und unteren Rahmenteil 3, 4 u. ä. ab. Bevorzugt hat er optisch die Form von Freiflächen, gewöhnlich bezeichnet mit dem englischen Ausdruck "Free Form" oder "Freeform", oder er besteht aus einer Menge von optischen Freiformflächen so, damit jede Lichtquelle 6 der horizontalen Rippe des Lichtleiters 2 ihre eigene optische Freiflächenform hat. Das von der Lichtquelle 6 abgestrahlte und auf die metallisierte optische Fläche des Reflektors 8 anfallende Licht wird in die horizontale Platte des Lichtleiters 2 reflektiert.

Der Entlüftungsschlauch 9 mit Öffnungen ist aus dem elastischen Polymer oder synthetischen Kautschuk, bevorzugt aus EPDM (Ethylen-Propylen-Dien-Kautschuk) hergestellt und befindet sich in dem unteren Teil des lichtleitenden Kühlergrills zwischen dem Gehäuse 5 und dem unteren Rahmenteil 4. Der Entlüftungsschlauch 9 weist an seiner Oberfläche unregelmäßig angeordnete Öffnungen verschiedener Durchmesser auf, die zur Verteilung der Luft innerhalb des lichtleitenden Kühlergrills zwecks Luftzufuhr in den Raum zwischen der Außenabdeckung 1 und dem Lichtleiter 2 dient und gemeinsam mit den Entlüftungsteilen trägt er zur Trocknung des Innenraumes des lichtleitenden Kühlergrills, bzw. zur Ableitung des Wasserdampfes auswärts aus dem lichtleitenden Kühlergrill bei. Die Zahl, Position und Größe der Öffnungen in dem Entlüftungsschlauch 9 ergibt sich aus den Kundenanforderungen und dem jeweiligen Konzept des lichtleitenden Kühlergrills, beispielsweise kann er von der Art der Luftzufuhr in den Entlüftungsschlauch 9, von der Größe des Kühlergrills, von den verwendeten Materialien usw. abhängen. Die zu verschiedenen Bauteilen des lichtleitenden Kühlergrills gerichteten Öffnungen können verschieden Durchmesser haben, sodass zum Beispiel zu der Außenabdeckung 1 mehr Luft als zum Gehäuse 5 oder Lichtleiter 2 usw. strömen kann.

Die Luft wird in den Entlüftungsschlauch 9 über die Luftzufuhr zugeführt, die von außen des Fahrzeuges (vorteilhaft durch das Gitter in der Stoßstange unterhalb des Kühlergrills, durch das überdies auch mehr Luft in den Kühler strömen kann) zur Einlassöffnung oder Öffnungen des betreffenden Entlüftungsschlauches 9 geleitet wird. Aus dem Kühlergrill wird dann die Luft zusammen mit eventuellem Wasserdampf durch die Entlüftungsteile abgeleitet.

Der erfindungsgemäße lichtleitende Kühlergrill kann auch mehrere Entlüftungsschläuche 9 umfassen, die gleich sein oder sich unterscheiden können, z. B. durch Material, Durchmesser, Größe und Anordnung der Öffnungen, und zwar sowohl der Öffnungen, durch welche die Luft in den Entlüftungsschlauch 9 einströmt, wie auch der Öffnungen, durch welche die Luft aus dem Entlüftungsschlauch 9 einwärts in den Kühlergrill ausströmt, usw. Alternativ kann die Luft in den Entlüftungsschlauch 9 aus der im Kühlergrill ausgebildeten Luftzufuhr zugeleitet werden, d. h. zum Beispiel, dass durch die Außenabdeckung 1 eine Öffnung geführt wird, durch die der betreffende Entlüftungsschlauch 9 durchgeht oder an die er aufgesetzt ist. Jedwede Luftzufuhr in den Entlüftungsschlauch 9 und eventuell auch jedwede Luftzufuhr in das Innere des Kühlergrills ist vorteilhaft mit einem Filter ausgestattet, um Staub und weitere Schmutzpartikel oder Wasser abzufangen.

Die Radarblende 11 kann aus Polycarbonat (PC) oder Polymethylmethacrylat (PMMA) hergestellt werden. Die Radarblende 11 befindet sich im unteren Teil des lichtleitenden Kühlergrills zwischen der Außenabdeckung 1 und dem Gehäuse u5. Die Radarblende 11 ist mit dem Gehäuse mittels einiger Schrauben verbunden. Gegen Wassereintritt in den lichtleitenden Kühlergrill ist zwischen der Radarblende 11 und dem Gehäuse 5 eine umlaufende Dichtung.

In einer vorteilhaften Ausführung ist die Außenabdeckung 1 für das Licht in beiden Richtungen durchlässig, also einwärts in den Kühlergrill sowie auswärts. Die Außenabdeckung 1 bedeckt wenigstens 50 % der Fläche der Montageöffnung des Kühlergrills. Der lichtleitende Kühlergrill kann in zwei Betriebsmodi, bzw. in zwei Designs eingestellt werden, dies sind das Tagesdesign und das Nachtdesign. Die Einstellung des Designs erfolgt über die Schalttafel des Fahrzeuges gleichzeitig mit der automatischen Betätigung der Schweinwerfer.

Das Tagesdesign ist dadurch definiert, dass die Lichtquellen 6 nicht eingespeist werden und leuchten also nicht. In diesem Design dringt das Licht von außen in den lichtleitenden Kühlergrill über die Außenabdeckung 1 ein. In einer vorteilhaften Ausführung des lichtleitenden Kühlergrills erleuchtet das hinter die Außenabdeckung 1 eingedrungene Licht den lichtleitenden Kühlergrill und wird nachfolgend von dem lichtleitenden Kühlergrill über die Außenabdeckung 1 nach außen geleitet. In der Außenansicht ist der gewünschte visuelle Effekt sichtbar, wobei die konkrete Ausführung des visuellen Effekts sich aus der Form der Außenabdeckung 1, des Lichtleiters und eventuell auch des oberen und unteren Rahmenteil 3, 4 ergibt.

Das Nachtdesign ist dadurch definiert, dass die Lichtquellen 6 eingespeist werden, also strahlen sie Licht in den Lichtleiter 2 ab, der hin zur Außenabdeckung 1 und nach außen vom lichtleitenden Kühlergrill leuchtet. In einer vorteilhaften Ausführung wird ein kleinerer Lichtanteil aus dem Lichtleiter 2 von der Innenseite der Außenabdeckung 1 zurück reflektiert, also zurück nach innen von der einwärts in den lichtleitenden Kühlergrill gerichteten Seite der Außenabdeckung 1, wobei der größere Lichtanteil durch die Außenabdeckung 1 in Auswärtsrichtung aus dem lichtleitenden Kühlergrill durchgeht, wodurch der lichtleitende Kühlergrill beleuchtet wird. In der Außenansicht ist der gewünschte visuelle Effekt sichtbar, wobei sich die konkrete Ausführung des visuellen Effekts aus der Form der Außenabdeckung 1 ergibt.

Der lichtleitende Kühlergrill ist an der Fahrzeugfrontseite mittels eines Befestigungsteils, und zwar mittels Schrauben und Einsteckmuttern befestigt. Das Befestigungsteil ist ein Universalteil, das sowohl den lichtleitenden Kühlergrill, wie auch einen einfachen, einschichtigen (mit einer Stärke) schwarzen Kunststoffkühlergrill tragen kann.

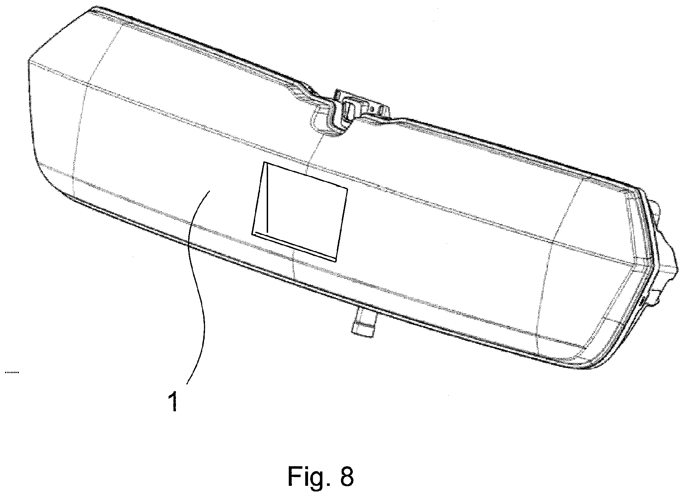

In der Fig. 8 ist eine alternative Ausführung der Außenabdeckung 1 dargestellt, die für die alternative Ausführung des erfindungsgemäßen Kühlergrills bestimmt ist, wo durch den Kühlergrill die Luft zum Kühler geleitet wird. In dieser Ausführung ist in der Außenabdeckung 1 eine Öffnung ausgebildet, die für die Luftführung zum Kühler dient. Hinter dieser Öffnung verläuft in der gesamten Stärke des Kühlergrills (d. h. in der Richtung von außen nach hinten) ein Luftdurchgang, der mittels Isolierung vom Inneren des Kühlergrills getrennt ist, sodass die Luft, die durch die Öffnung in der Außenabdeckung 1 durchgeht, nicht in das Innere des Kühlergrills gelangt und kein Wasser und keine Schmutzpartikel nach Innen einträgt. Alternativ kann der Luftdurchgang zum Kühler durch den Kühlergrill auch an anderer Stelle verlaufen, er kann andere Form haben und/oder es können auch mehrere Durchgänge vorhanden sein.

In der in Schnittdarstellungen nach Fig. 9 und 10 dargestellten Ausführung ist der lichtleitende Kühlergrill ein Bestandteil der Baugruppe des lichtleitenden Kühlergrills, der weiter den Radarhalter 12 und Radar 13 umfasst. Der Radarhalter 12 ist zur Radarblende 11 angeschraubt und zum Radarhalter 12 ist der Radar 13 befestigt. In Fig. 9 ist weiter der zur Luftzufuhr angeschlossene Entlüftungsschlauch 9 sichtbar (bzw. sein Teil außerhalb des Kühlergrills) Ober- und Unterhalb des lichtleitenden Kühlergrills sind die umliegenden Einbauteile des Fahrzeugs dargestellt. Wie in Fig. 9 und 10 zu erkennen ist, ist der durch die Radarblende 11 begrenzte Raum vom Rest des Inneren des lichtleitenden Kühlergrills getrennt und isoliert.

### Bezugszeichenliste

- 1 -: Außenabdeckung
- 2 -: Lichtleiter
- 3 -: oberer Rahmenteil
- 4 -: unterer Rahmenteil
- 5 -: Gehäuse
- 6 -: Lichtquelle
- 7 -: Optik für die Lichthomogenisierung
- 8 -: Reflektor
- 9 -: Entlüftungsschlauch
- 10 -: Leiterplatte
- 11 -: Radarblende
- 12 -: Radarhalter
- 13 -: Radar

## Patentansprüche

1. Lichtleitender Kühlergrill, der einen Lichtleiter (2), wenigstens eine Leiterplatte (10) mit einer Menge von Lichtquellen (6), ein Gehäuse (5), einen Rahmen und eine Außenabdeckung (1) umfasst, wobei das Gehäuse (5) wenigstens an einem Abschnitt seines Umfangs mit der Außenabdeckung (1) verbunden ist und wobei sich der Rahmen und der Lichtleiter (2) zwischen dem Gehäuse (5) und der Außenabdeckung (1) befinden und der Rahmen wenigstens an einem der beiden Teile, dem Gehäuse (5) und der Außenabdeckung (1), befestigt ist und wobei der Lichtleiter (2) am Rahmen angebracht ist, wobei die Außenabdeckung (1) die meiste Fläche einer Montageöffnung des Kühlergrills abdeckt und für das Licht vom Lichtleiter (2) durchlässig ist, **dadurch gekennzeichnet, dass** der lichtleitende Kühlergrill ferner einen Entlüftungsschlauch (9) umfasst, der wenigstens eine Öffnung für die Luftzufuhr in den Schlauch und wenigstens eine Öffnung für die Luftabfuhr aus dem Schlauch in den lichtleitenden Kühlergrill aufweist und der lichtleitende Kühlergrill ferner wenigstens ein Entlüftungsteil für die Luftabfuhr aus dem Kühlergrill umfasst, wobei der Entlüftungsschlauch (9) mehrere zur Außenabdeckung (1) gerichtete Öffnungen für die Luftabfuhr aus dem Schlauch in den lichtleitenden Kühlergrill umfasst.

2. Lichtleitender Kühlergrill nach Anspruch 1, **dadurch gekennzeichnet, dass** der Rahmen ein oberes Rahmenteil (3) und ein unteres Rahmenteil (4) umfasst, wobei der Lichtleiter (2) mit seiner oberen Hälfte am oberen Rahmenteil (3) und mit seiner unteren Hälfte am unteren Rahmenteil (4) angebracht ist.

3. Lichtleitender Kühlergrill nach Anspruch 1 oder 2, **dadurch gekennzeichnet, dass** als Lichtquellen (6) LED-Spotlichtquellen (6) verwendet werden und die Menge der LED-Spotlichtquellen (6) sich hinter dem Rahmen befindet, der undurchsichtig ist, und der Lichtleiter (2) durch Öffnungen im Rahmen aus dem Raum zwischen dem Rahmen und dem Gehäuse (5) in den Raum zwischen dem Rahmen und der Außenabdeckung (1) hindurchgeht.

4. Lichtleitender Kühlergrill nach einem oder mehreren der vorgenannten Ansprüche, **dadurch gekennzeichnet, dass** die Außenabdeckung (1) und der Lichtleiter (2) aus synthetischem Polycarbonat (PC) oder Polymethylmethacrylat (PMMA) hergestellt sind.

5. Lichtleitender Kühlergrill nach einem oder mehreren der vorgenannten Ansprüche, **dadurch gekennzeichnet, dass** die Außenabdeckung (1) und der Lichtleiter (2) in beide Richtungen lichtdurchlässig sind.

6. Lichtleitender Kühlergrill nach einem oder mehreren der vorgenannten Ansprüche, **dadurch gekennzeichnet, dass** der lichtleitende Kühlergrill weiter einen zwischen dem Lichtleiter (2) und den Lichtquellen (6) zum Lichtleiter befestigten dünnen Lichtleiter umfasst.

7. Lichtleitender Kühlergrill nach einem oder mehreren der vorgenannten Ansprüche, **dadurch gekennzeichnet, dass** der lichtleitende Kühlergrill weiter wenigstens einen Durchgang für die Luftführung hin zum Kühler umfasst.

8. Lichtleitender Kühlergrill nach einem oder mehreren der vorgenannten Ansprüche, **dadurch gekennzeichnet, dass** der lichtleitende Kühlergrill weiter eine Radarblende (11) umfasst, wobei das Gehäuse (5) an seiner Rückseite eine durchgehende Öffnung aufweist, wobei die Radarblende (11) in der Öffnung im Gehäuse (5) befestigt ist und von der Rückseite des Gehäuses (5) durch den größten Teil der Stärke des lichtleitenden Kühlergrills in Richtung zur Außenabdeckung (1) führt, wobei die Radarblende (11) von hinten den offenen Raum für ein Radar begrenzt, wobei die Radarblende (11) eine Vorderwand aufweist, wobei die Außenabdeckung (1) im Bereich vor der Vorderwand der Radarblende (11) eine konstante Stärke hat und die Vorderwand der Radarblende (11) eine konstante Stärke hat.

9. Lichtleitender Kühlergrill nach einem oder mehreren der vorgenannten Ansprüche, **dadurch gekennzeichnet, dass** der Lichtleiter (2) an der den Lichtquellen (6) zugewandten Seite eine Optik (7) zur Homogenisierung des Lichtes jeder Lichtquelle (6) umfasst und an der gegenüberliegenden, zur Außenabdeckung (1) gerichteten Seite eine Optik (7) zur Homogenisierung des aus dem Lichtleiter (2) ausgehenden Lichtes aufweist.

## Claims

1. A light-guiding radiator grill, which comprises a light guide (2), at least one printed circuit board (10) having a plurality of light sources (6), a housing (5), a frame and an outer cover (1), wherein the housing (5) is connected to the outer cover (1) at least on a section of its circumference and wherein the frame and the light guide (2) are located between the housing (5) and the outer cover (1) and the frame is secured at least to one of the two parts consisting of the housing (5) and the outer cover (1) and wherein the light guide (2) is attached to the frame, wherein the outer cover (1) covers most of the surface of the mounting opening of the radiator grill and is permeable to the light from the light guide (2), **characterized in that** the light-guiding radiator grill further comprises a ventilation tube (9), which has at least one opening for the supplying air into the tube and at least one opening for discharging air out of the tube into the light-guiding radiator grill and the light-guiding radiator grill further comprises at least one ventilation part for discharging air out of the radiator grill, wherein the ventilation tube (9) comprises several openings directed towards the outer cover (1) for the discharge of air out of the tube into the light-guiding radiator grill.

2. The light-guiding radiator grill according to claim 1, **characterized in that** the frame comprises an upper frame part (3) and a lower frame part (4), wherein the light guide (2) is mounted with its upper half on the upper frame part (3) and with its lower half on the lower frame part (4).

3. The light-guiding radiator grill according to claim 1 or 2, **characterized in that** LED spot light sources (6) are used as light sources (6) and the amount of the spot light sources is located behind the frame, which is opaque, and the light guide (2) passes through the openings in the frame from the space between the frame and the housing (5) into the space between the frame and the outer cover (1).

4. The light-guiding radiator grill according to one or more of the aforementioned claims, **characterized in that** the outer cover (1) and the light guide (2) are made of synthetic polycarbonate (PC) or polymethyl methacrylate (PMMA).

5. The light-guiding radiator grill according to one or more of the aforementioned claims, **characterized in that** outer cover (1) and the light guide (2) are light-permeable in both directions.

6. The light-guiding radiator grill according to one or more of the aforementioned claims, **characterized in that** the light-guiding radiator grill further comprises a thin light guide fixed between the light guide (2) and the light sources (6) to the light guide.

7. The light-guiding radiator grill according to one or more of the aforementioned claims, **characterized in that** the light-guiding radiator grill further comprises at least one passage for the air guidance towards the radiator.

8. The light-guiding radiator grill according to one or more of the aforementioned claims, **characterized in that** the light-guiding radiator grill further comprises a radar diaphragm (11), wherein the housing (5) has a continuous opening on its rear side, wherein the radar diaphragm (11) is fixed in the opening in the housing (5) and leads from the rear side of the housing (5) through most of the thickness of the light-guiding radiator grill in the direction of the outer cover (1), wherein the radar diaphragm (11) delimits the open space for a radar from behind, wherein the radar diaphragm (11) has a front wall, wherein the outer cover (1) has a constant thickness in the region in front of the front wall of the radar diaphragm (11) and the front wall of the radar diaphragm (11) has a constant thickness.

9. The light-guiding radiator grill according to one or more of the aforementioned claims, **characterized in that**, on the side facing the light sources (6), the light guide (2) comprises an optical system (7) for homogenizing the light of each light source (6) and, on the opposite side facing the outer cover (1), has an optical system (7) for homogenizing the light emanating from the light guide (2).

## Revendications

1. Calandre conductrice de lumière, qui comprend un guide de lumière (2), au moins un circuit imprimé (10) avec plusieurs sources de lumière (6), un boîtier (5), un châssis et un recouvrement externe (1), dans laquelle le boîtier (5) est relié, au moins au niveau d'une portion de sa circonférence, avec le recouvrement externe (1) et dans laquelle le châssis et le guide de lumière (2) se trouvent entre le boîtier (5) et le recouvrement externe (1) et le châssis est fixé à au moins une des deux parties, au boîtier (5) et au recouvrement externe (1), et dans laquelle le guide de lumière (2) est monté sur le châssis, dans laquelle le recouvrement externe (1) recouvre la majorité de la surface d' ouverture de montage de la calandre et est transparente pour la lumière provenant du guide de lumière (2), **caractérisée en ce que** la calandre conductrice de lumière comprend en outre un tuyau de ventilation (9), qui comprend au moins une ouverture pour l'introduction d'air dans le tuyau et au moins une ouverture pour l'évacuation d'air hors du tuyau vers la calandre conductrice de lumière, et la calandre conductrice de lumière comprend en outre au moins une partie de ventilation pour l'évacuation d'air hors de la calandre, dans laquelle le tuyau de ventilation (9) comprend plusieurs ouvertures, orientées vers le recouvrement externe (1), pour l'évacuation de l'air hors du tuyau vers la calandre conductrice de lumière.

2. Calandre conductrice de lumière selon la revendication 1, **caractérisée en ce que** le châssis comprend une partie de châssis supérieure (3) et une partie de châssis inférieure (4), dans laquelle le guide de lumière (2) est monté, avec sa moitié supérieure, sur la partie de châssis supérieure (3) et, avec sa moitié inférieure, sur la partie de châssis inférieure (4).

3. Calandre conductrice de lumière selon la revendication 1 ou 2, **caractérisée en ce que** les sources de lumière (6) utilisées sont des sources de lumière de type spots LED (6) et l'ensemble des sources de lumière de type spots LED (6) se trouvent derrière le châssis, qui est opaque, et le guide de lumière (2) traverse des ouvertures dans le châssis de l'espace entre le châssis et le boîtier (5) vers l'espace entre le châssis et le recouvrement externe (1).

4. Calandre conductrice de lumière selon l'une ou plusieurs des revendications précédentes, **caractérisée en ce que** le recouvrement externe (1) et le guide de lumière (2) sont constitués de polycarbonate synthétique (PC) ou de polyméthylméthacrylate (PMMA).

5. Calandre conductrice de lumière selon l'une ou plusieurs des revendications précédentes, **caractérisée en ce que** le recouvrement externe (1) et le guide de lumière (2) sont transparents dans les deux sens.

6. Calandre conductrice de lumière selon l'une ou plusieurs des revendications précédentes, **caractérisée en ce que** la calandre conductrice de lumière comprend en outre un mince guide de lumière fixé entre le guide de lumière (2) et les sources de lumière (6).

7. Calandre conductrice de lumière selon l'une ou plusieurs des revendications précédentes, **caractérisée en ce que** la calandre conductrice de lumière comprend en outre au moins un passage pour l'introduction d'air dans le refroidisseur.

8. Calandre conductrice de lumière selon l'une ou plusieurs des revendications précédentes, **caractérisée en ce que** la calandre conductrice de lumière comprend en outre un masque radar (11), dans laquelle le boîtier (5) présente, sur son côté arrière, une ouverture traversante, dans laquelle le masque radar (11) est fixé dans l'ouverture dans le boîtier (5) et conduit, du côté arrière du boîtier (5) à travers la plus grande partie de l'épaisseur de la calandre conductrice de lumière en direction du recouvrement externe (1), dans laquelle le masque radar (11) délimite par l'arrière l'espace ouvert pour un radar, dans laquelle le masque radar (11) présente une paroi avant, dans laquelle le recouvrement externe (1) présente, dans la partie devant la paroi avant du masque radar (11), une épaisseur constante et la paroi avant du masque radar (11) présente une épaisseur constante.

9. Calandre conductrice de lumière selon l'une ou plusieurs des revendications précédentes, **caractérisée en ce que** le guide de lumière (2) comprend, au niveau de la face orientée vers les sources de lumière (6), une optique (7) pour l'homogénéisation de la lumière de chaque source de lumière (6) et, au niveau de la face opposée, orientée vers le recouvrement externe (1), une optique (7) pour l'homogénéisation de la lumière sortant du guide de lumière (2).
